# EUROPEAN PATENT APPLICATION

(11) **EP 4 249 352 A1**
(43) Date of publication of application: **27.09.2023**
(21) Application number: 21894551.7
(22) Date of filing: 11.11.2021
(51) Int. Cl.: B62D 21/18, B62D 25/08, B60R 21/13

(54) **TRACTOR**

(30) Priority: 17.11.2020 JP 2020190826
(71) Applicant: Yanmar Holdings Co., Ltd., Osaka-shi, Osaka 530-8311 (JP)
(72) Inventor: MATSUI, Yutaka, Osaka-shi Osaka 530-8311 (JP)
(74) Representative: Dennemeyer & Associates S.A.
(86) International application number: PCT/JP2021/041502
(87) International publication number: WO 2022/107677

(57) **Abstract**

This tractor is provided with a rollover protective frame (11) that is disposed in front of, lateral to, and above a driver's seat for the sake of protecting the driver in the event of rollover of the tractor. The rollover protective frame (11) comprises: a lower left frame (13) and a lower right frame (14) that are mounted to a tractor body frame (2); and a left support bracket (15) and a right support bracket (16) that are provided to the lower left frame (13) and the lower right frame (14), respectively. Further, the tractor has provided thereto a linking member (50) that links the left support bracket (15) and the right support bracket (16) to each other.

## Description

### TECHNICAL FIELD

The present invention relates to a tractor.

### BACKGROUND ART

A tractor has been conventionally known in which a rollover protective frame that protects a driver at the time of falling over is disposed in front of a driver seat. This type of tractor is disclosed in Patent Literatures 1 and 2.

A tractor of Patent Literature 1 includes an engine hood covering an engine, a handle post disposed behind the engine hood, and a front overturn protective frame arranged to correspond to a portion in which the engine hood and the handle post are adjacent to each other. The front overturn protective frame is a tiltable frame and includes a lower frame attached and fixed to a mounting bracket and an arch-shaped upper frame pivotally attached to the lower frame. The mounting bracket is attached and fixed to a tractor body fixation portion that includes a transmission case and a tractor body frame, etc. The lower frame and the upper frame are connected via a bracket. The upper frame is supported to pivot up and down with respect to the lower frame about an axis of a support pin extending through the upper frame and the bracket.

A tractor of Patent Literature 2 includes a rotating handle for steering a tractor body, which is disposed at a tractor body intermediate portion, a control seat that is disposed in the rear of the tractor body, and a safety frame (rollover protective frame) that protects the operator's surroundings. A pipe is bent in an inversed U-shape to form the safety frame, and the safety frame is connected to a tractor frame and supported thereon and is disposed in front of the rotating handle. An accessory placing frame is connected across a pair of left and right frame portions extending in an up-down direction inside the safety frame. The accessory placing frame also serves as a reinforcement frame for the safety frame.

### CITATION LIST

### Patent Literature

Patent Literature 1: JP 2008-62743 A
Patent Literature 2: JP S53-33111 UM-A

### DISCLOSURE OF INVENTION

### PROBLEMS TO BE SOLVED BY THE INVENTION

However, in the configurations of Patent Literatures 1 and 2 described above, when the tractor falls over, an impact force generated by the fall is not evenly distributed and transmitted to the left and right sides of the tractor body fixation portion (tractor frame) via the rollover protective frame (safety frame) and is likely to concentratedly act on a portion of the rollover protective frame (safety frame). In addition, the impact force described above is likely to concentratedly act on a connection portion between the rollover protective frame (safety frame) and the tractor body fixation portion (tractor frame). Therefore, the rollover protective frame (safety frame) or the connection portion between the rollover protective frame and the tractor body fixation portion may be damaged.

In Patent Literature 2 described above, the accessory placing frame serving as the reinforcement frame is disposed on the safety frame, and thus the aforementioned problem can be relieved. However, the accessory placing frame only allows for placing thereon a small object such as cigarettes and drinks. Accordingly, the accessory placing frame cannot attain sufficient reinforcement and thus has room for improvement.

The present invention is made in view of the circumstances above, and an object of the present invention is to provide a tractor that can prevent a rollover protective frame from being damaged at the time of falling over.

### MEANS FOR SOLVING THE PROBLEMS

### EFFECT OF THE INVENTION

The problems to be solved by the present invention are as described above. Next, the means for solving the problems will be described as below.

According to an aspect of the present invention, a tractor having the following configuration is provided. In other words, the tractor includes a tractor body frame, a driver seat, and a rollover protective frame. The driver seat is disposed above the tractor body frame and is a section on which a driver can sit. The rollover protective frame is disposed in front of and on at least a side of the driver seat to protect the driver when the tractor falls over. The rollover protective frame includes a lower left frame and a lower right frame, and a left support bracket and a right support bracket. The lower left frame and the lower right frame are respectively attached to the left and right sides of the tractor body frame. The left support bracket and the right support bracket respectively include rotation supporting points and are respectively disposed on the lower left frame and the lower right frame. In addition, the tractor includes a linking member that connects the left support bracket and the right support bracket.

Thus, when the rollover protective frame receives an impact at the time of falling over of the tractor, the presence of the linking member allows the impact force due to the impact to be distributed and transmitted evenly to the left and right sides of the tractor body frame of the tractor. Therefore, the impact force can be avoided from being concentratedly transmitted to a portion of the rollover protective frame. As a result, the rollover protective frame can be prevented from being damaged. In addition, the linking member can be used as a grip portion that can be gripped by the driver when the driver gets in and out of the tractor, and safety in this case can be increased.

The tractor is preferably configured as below. In other words, the rollover protective frame includes an upper frame. The upper frame has an arched shape. The upper frame is arranged above the lower left frame and the lower right frame. The upper frame is supported rotatably about the rotation supporting points on the lower left frame and the lower right frame respectively via the left support bracket and the right support bracket.

Thus, the functionality of the rollover protective frame can be increased.

The tractor is preferably configured as below. In other words, the tractor includes a steering handle. The steering handle is disposed in front of the driver seat and behind the rollover protective frame. The linking member is arranged such that an upper end position of the linking member is on the same level as or below an upper end position of the steering handle in an up-down direction.

Therefore, the linking member cannot easily come into the forward vision of the driver seated on the driver seat. As a result, the forward vision of the driver can be prevented from being impaired by the linking member.

The tractor is preferably configured as below. In other words, the upper frame is rotatably operated relative to the lower left frame and the lower right frame and thereby the rollover protective frame is configured so as to be brought into an upright position or a tilted position. The upright position is the position in which the upper frame extends upward with respect to the lower left frame and the lower right frame. The tilted position is the position in which the upper frame extends forward with respect to the lower left frame and the lower right frame. A damper member is disposed on the rollover protective frame. The damper member is arranged forward to face the lower left frame or the lower right frame and the upper frame, and operates from the contracted state in the direction to extend when the rollover protective frame is changed from the tilted position to the upright position.

Thus, the operability of the rollover protective frame at the time of the rotating operation can be improved. In addition, the damper member cannot easily come into the vision of the driver seated on the driver seat. As a result, the forward vision of the driver can be prevented from being impaired by the damper member.

The tractor is preferably configured as below. In other words, a grip portion is disposed on the rollover protective frame. The grip portion is attached to the upper frame and is gripped when the upper frame is rotatably operated.

Thus, the operating rotation of the upper frame can be conducted by using the grip portion. As a result, the operability of the rollover protective frame can be improved.

The tractor is preferably configured as below. In other words, the upper frame includes a left extension portion, a right extension portion, and a connecting portion. The left extension portion extends in the up-down direction and is rotatably supported at a lower end portion by the left support bracket. The right extension portion extends in the up-down direction and is rotatably supported at a lower end portion by the right support bracket. The connecting portion connects an upper end portion of the left extension portion and an upper end portion of the right extension portion. The grip portion is attached to at least one of the left extension portion and the right extension portion and is located on an outer side in a vehicle width direction of an innermost end in the vehicle width direction of the left extension portion or the right extension portion to which the grip portion is attached.

Thus, the grip portion can be arranged such that the forward vision of the driver seated on the driver seat is less likely to be hindered by the grip portion. As a result, the forward vision of the driver can be prevented from being impaired by the grip portion.

### BRIEF DESCRIPTION OF DRAWINGS

FIG. 1 is a side view of a tractor according to an embodiment of the present invention.
FIG. 2 is a perspective view of the tractor.
FIG. 3 is a partially enlarged perspective view of the tractor.
FIG. 4 is a side view of a rollover protective frame on the tractor.
FIG. 5 is a front view of the rollover protective frame on the tractor.
FIG. 6 is a rear view of the rollover protective frame on the tractor.
FIG. 7 is a partially enlarged perspective view of the left side of the rollover protective frame on the tractor.
FIG. 8(a) is a side view illustrating a state where the rollover protective frame is in an upright position. FIG. 8(b) is a side view illustrating a state of the rollover protective frame during assembly of a damper member to the rollover protective frame.
FIG. 9 is a side view illustrating the rollover protective frame in a tilted position.
FIG. 10 is a partially enlarged perspective view of the right side of the rollover protective frame on the tractor.

### DESCRIPTION OF EMBODIMENTS

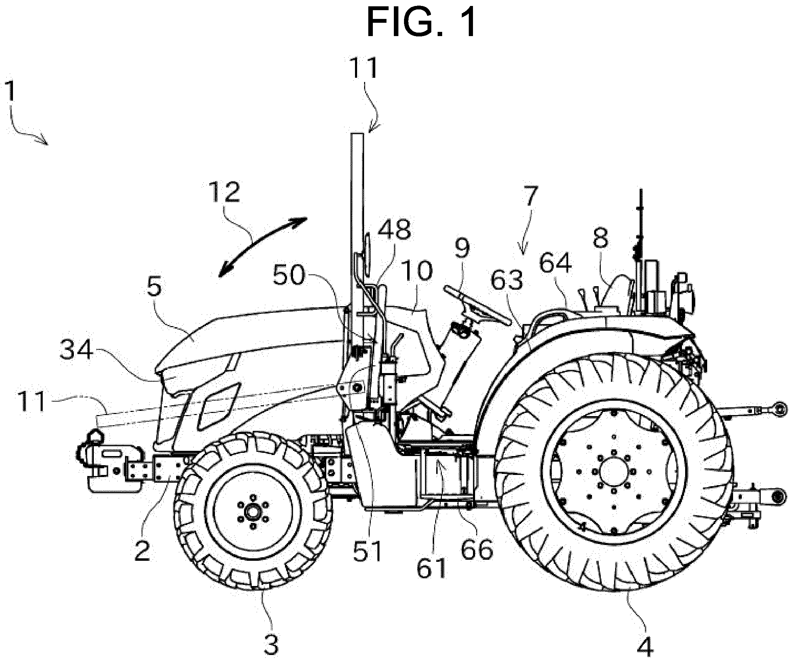

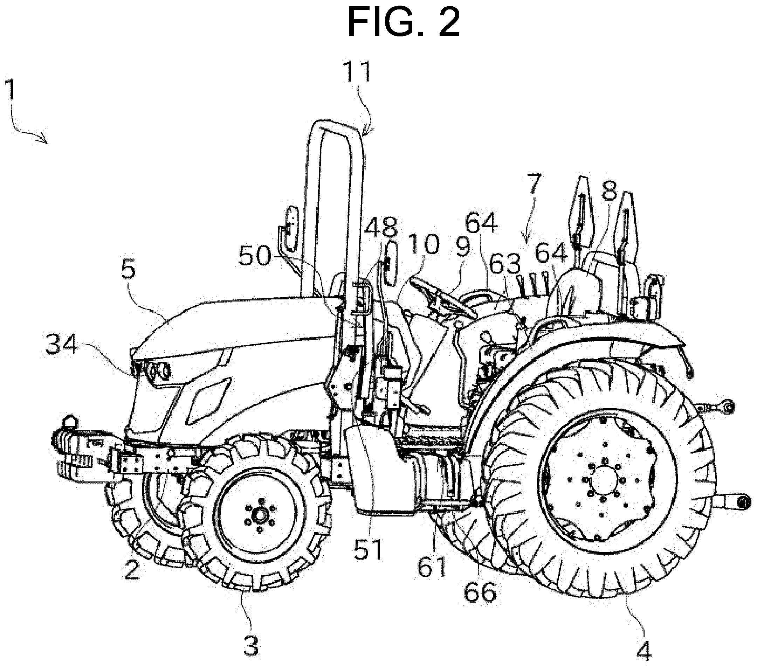

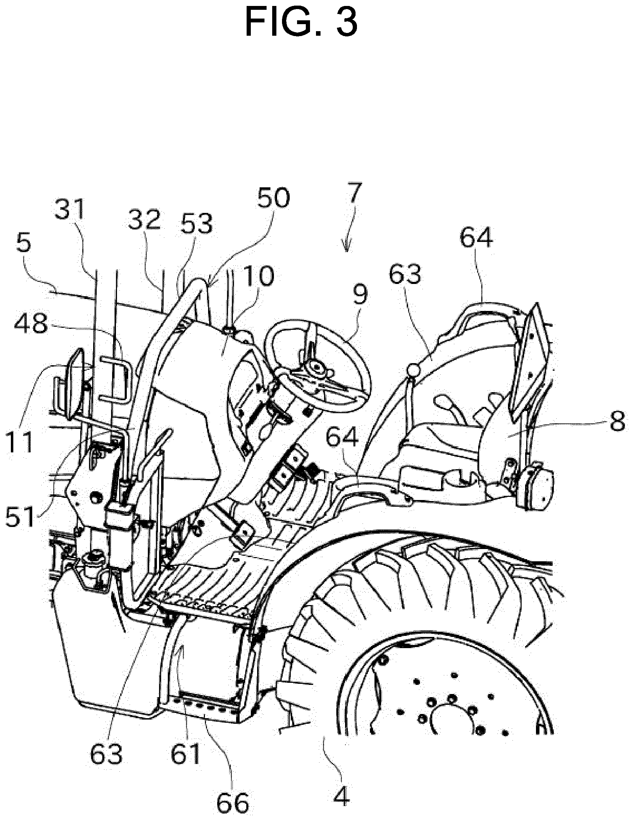

Next, embodiments of the present invention will be described with reference to the drawings. FIG. 1 is a side view of a tractor 1 according to an embodiment of the present invention. FIG. 2 is a perspective view of the tractor 1. FIG. 3 is a partially enlarged perspective view of the tractor 1. In the following description, the left side and the right side are referred to as "left" and "right" in relation to the direction in which the tractor 1 moves forward. The left-right direction corresponds to a vehicle width direction of the tractor 1.

As illustrated in FIGS. 1 and 2, the tractor 1 includes a traveling machine body formed of a tractor body frame 2, etc. The traveling machine body is supported by a pair of left and right front wheels 3 as traveling wheels and a pair of left and right rear wheels 4 as traveling wheels. The traveling machine body is configured such that an operating machine can be attached and detached to and from a rear portion thereof. For example, various operating machines such as a tiller, a plow, a fertilizing machine, a grass cutter, and a seeding machine can be selected as the operating machine.

A hood 5 is disposed in front of the traveling machine body. The hood 5 is disposed in an openable and closable manner such that the inside thereof can be exposed. An engine or the like as a drive source is arranged inside the hood 5. The engine is formed of a diesel engine in the present embodiment but may be another type of engine.

A tractor cab 7 of the tractor 1 is arranged behind the hood 5. As also illustrated in FIG. 3, the tractor cab 7 includes a driver seat 8 and a steering handle 9. A driver can sit on the driver seat 8. The steering handle 9 is arranged in front of the driver seat 8. Additionally, in the tractor cab 7, a dashboard 10 is arranged in front of the steering handle 9.

The dashboard 10 is disposed adjacent to the hood 5 in a front-back direction. On the dashboard 10, an operation unit by which the driver of the tractor 1 operates the tractor 1 or the like, and gauges and other instruments that display various types of information such as travel speed are arranged. The driver can operate the tractor 1 for traveling or the like by using the steering handle 9 and the aforementioned operating unit, etc.

In the tractor 1, power generated by the engine in the hood 5 is transmitted via a clutch housing and a transmission case, etc. (not illustrated) to the rear wheels 4 in accordance with the driving operation by the driver. Thus, the tractor 1 can travel.

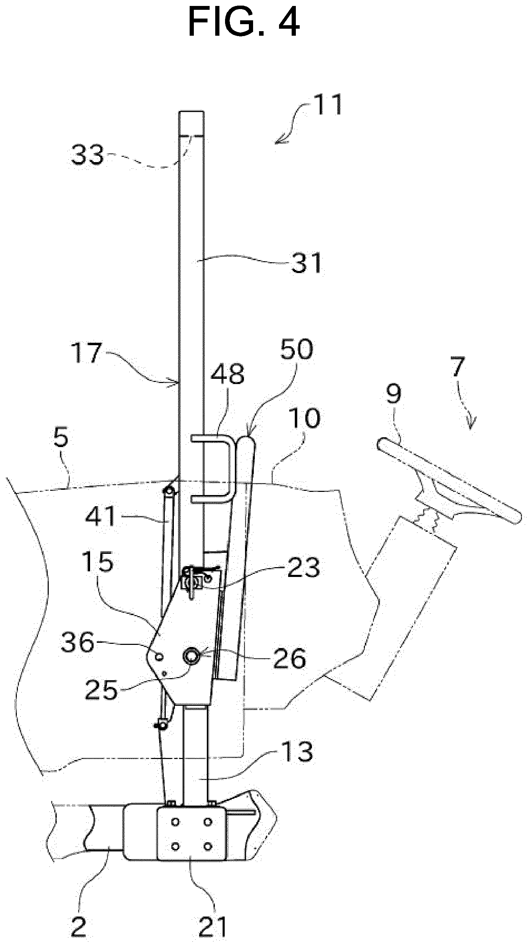

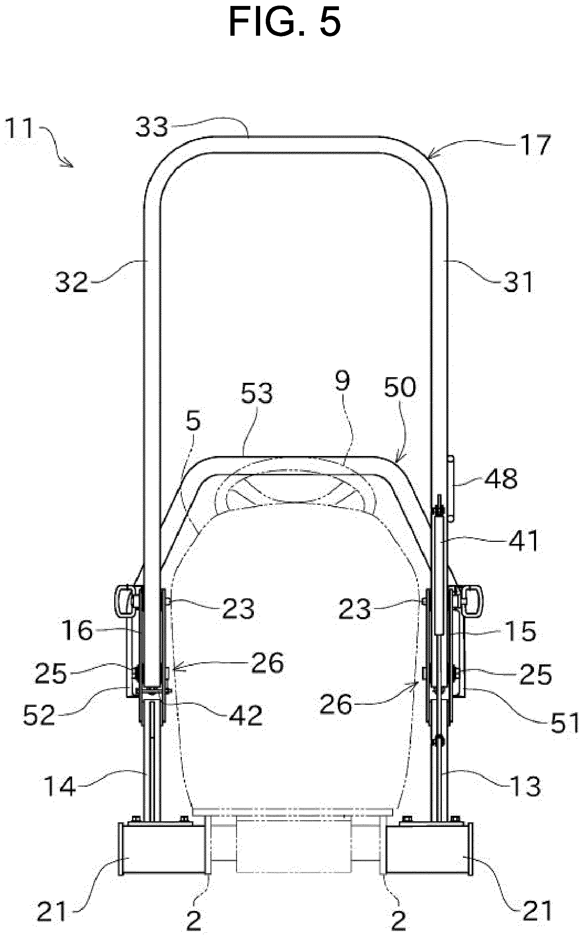

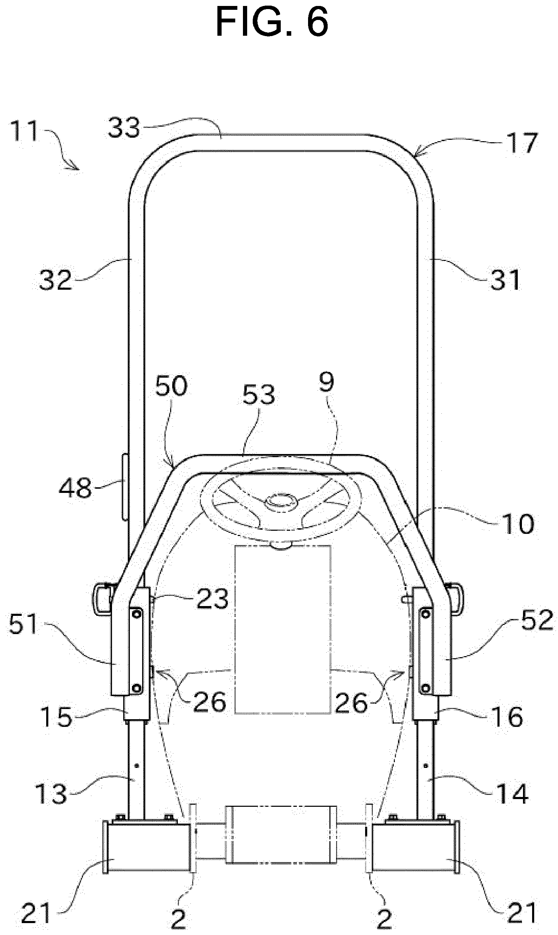

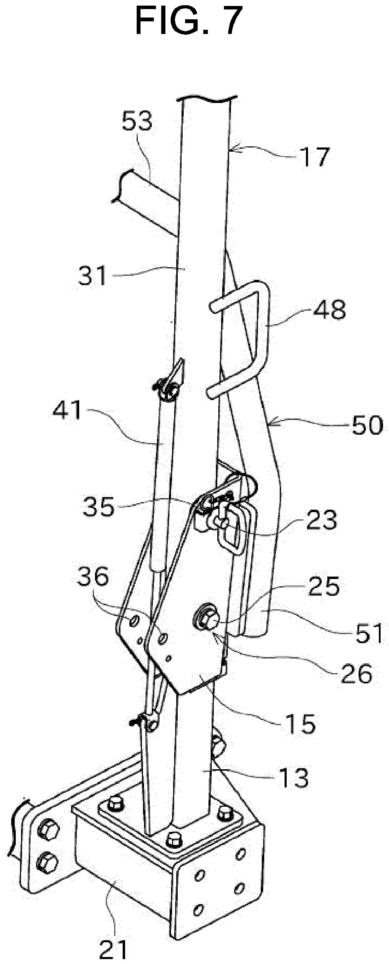

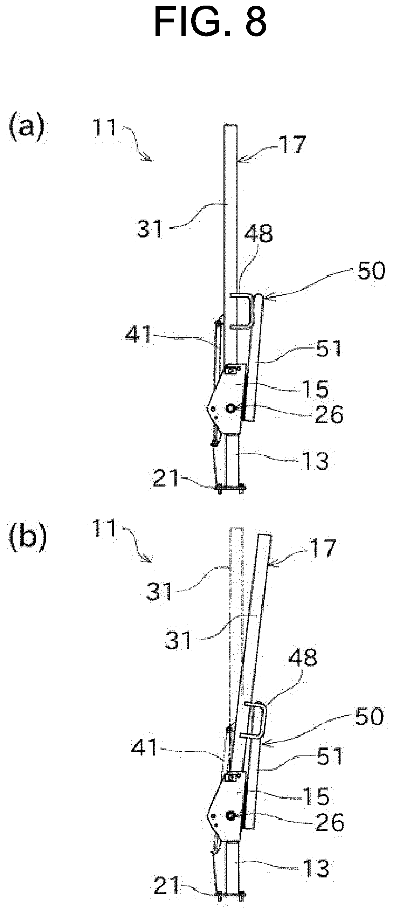

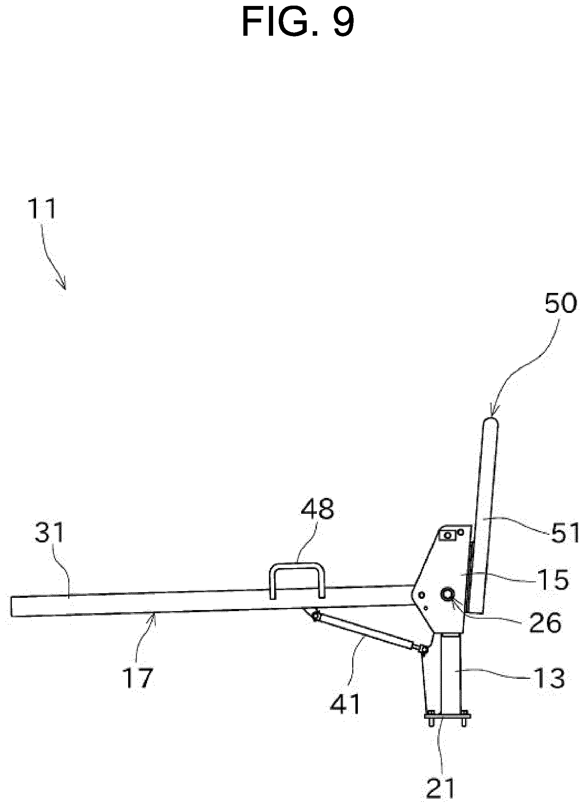

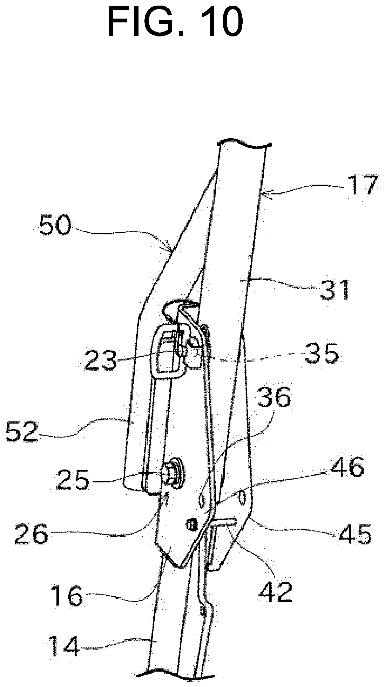

Next, a rollover protective frame 11 that protects the driver in the tractor cab 7 when the tractor 1 falls over will be described with reference to FIGS. 1 to 10. FIG. 4 is a side view of the rollover protective frame 11. FIG. 5 is a front view of the rollover protective frame 11. FIG. 6 is a rear view of the rollover protective frame 11. FIG. 7 is a partially enlarged perspective view of the left side of the rollover protective frame 11. FIG. 8(a) is a side view illustrating a state where the rollover protective frame 11 is in an upright position. FIG. 8(b) is a side view illustrating a state of the rollover protective frame 11 during assembly of a damper member 41 to the rollover protective frame 11. FIG. 9 is a side view illustrating the rollover protective frame 11 in a tilted position. FIG. 10 is a partially enlarged perspective view of the right side of the rollover protective frame 11.

As illustrated in FIGS. 1, 2, 3, and 4, the rollover protective frame 11 is disposed at a front side portion of the tractor cab 7 in the middle of the traveling machine body in the front-back direction. The rollover protective frame 11 is configured to be tiltable such that a portion thereof can be moved in the direction indicated by arrow 12 in FIG. 1. The rollover protective frame 11 can be brought into the upright position indicated by the solid line in FIG. 1 or be tilted forward of the traveling machine body from the upright position, i.e., be brought into the tilted position indicated by the chain double-dashed line in FIG. 1. In the following description, in principle, the configuration of each portion will be described in a state where the rollover protective frame 11 is in the upright position.

The rollover protective frame 11 is disposed in front of and on at least a side of the driver seat 8. In the present embodiment, the rollover protective frame 11 is disposed in front of the driver seat 8 and on sides of and above the driver seat 8. The rollover protective frame 11 is arranged on the left and right sides of a rear end portion of the hood 5, which is close to the tractor cab 7, and is located above the hood 5. In addition, the rollover protective frame 11 may be arranged near a location in which the hood 5 and the dashboard 10 adjacent to each other in the front-back direction are continuous in the front-back direction.

As illustrated in FIGS. 5 and 6, the rollover protective frame 11 includes a lower left frame 13 and a lower right frame 14, a left support bracket 15 and a right support bracket 16, and an upper frame 17. The lower left frame 13 and the left support bracket 15 are arranged on the left side of the traveling machine body of the tractor 1, and the lower right frame 14 and the right support bracket 16 are arranged on the right side of the traveling machine body of the tractor 1.

In the rollover protective frame 11, the lower left frame 13 and the lower right frame 14 are configured substantially symmetrically to each other. Also, the left support bracket 15 and the right support bracket 16 are configured substantially symmetrically to each other. Accordingly, the left side configuration of the lower left and right frames 13, 14 and the left and right support brackets 15, 16 of the rollover protective frame 11 will be mainly described below.

The lower left frame 13 is attached to the left side of the tractor body frame 2. In the present embodiment, the lower left frame 13 is attached via a mounting bracket 21 to the left side of the tractor body frame 2. The tractor body frame 2 has a predetermined width in the left-right direction and extends in the front-back direction. The tractor body frame 2 is arranged below the hood 5 while supporting the engine and other components.

The mounting bracket 21 is disposed to protrude outward from the tractor body frame 2 in the left-right direction (toward the left side, i.e., in a direction away from the traveling machine body). The mounting bracket 21 is fixed to the tractor body frame 2. A protruding end portion (left side end portion) of the mounting bracket 21 is arranged further on the inner side in the left-right direction (on the right side, i.e., in a direction closer to the traveling machine body) than the front wheel 3 with respect to the tractor body frame 2.

The lower left frame 13 is disposed to extend upward from the mounting bracket 21. A lower end portion of the lower left frame 13 is fixed to the mounting bracket 21. Thus, the lower left frame 13 is immovable to the tractor body frame 2. An upper end portion of the lower left frame 13 is arranged at the rear end portion of the hood 5 and on the left side of an intermediate portion in the up-down direction. The left support bracket 15 is disposed on the upper end portion of the lower left frame 13.

As illustrated in FIG. 7, the left support bracket 15 extends in the up-down direction and is formed in a U-shape in plan view such that the front is opened. The left support bracket 15 is arranged to protrude upward from the upper end portion of the lower left frame 13. The left support bracket 15 is fixed to the upper end portion of the lower left frame 13 with the upper end of the lower left frame 13 fitted into a lower end portion of the left support bracket 15. Thus, the left support bracket 15 is immovable to the lower left frame 13 and furthermore to the tractor body frame 2.

The left support bracket 15 supports a lower end portion of the upper frame 17 such that the lower end portion of the upper frame 17 is rotatable while being fitted into an upper end portion of the left support bracket 15. Specifically, a locking pin 23 is disposed to extend in the left-right direction through an overlapped portion between the left support bracket 15 and the lower end portion of the upper frame 17, and thus the upper frame 17 is connected to the left support bracket 15 to be positioned with respect thereto.

In addition, a support pin 25 is disposed to extend in the left-right direction through a portion, which is located below the locking pin 23, of the overlapped portion between the left support bracket 15 and the lower end portion of the upper frame 17. A rotation supporting point 26 of the upper frame 17 is configured on the left support bracket 15 by the support pin 25. The upper frame 17 can rotate about the rotation supporting point 26 (support pin 25).

The upper frame 17 is configured such that the upper frame 17 can rotate about the rotation supporting point 26 with respect to each of the left support bracket 15 (lower left frame 13) and the right support bracket 16 (lower right frame 14). The rotation can be accomplished by a rotating operation described below. The rollover protective frame 11 moves the upper frame 17 by the rotation of the upper frame 17 in accordance with the rotating operation, and thus the posture of the rollover protective frame 11 can be changed.

For example, the upper frame 17 is rotatably operated relative to the left support bracket 15 and the right support bracket 16, and thus as illustrated in FIG. 8(a), the rollover protective frame 11 can be brought into the upright position in which the upper frame 17 extends upward with respect to the left and right support brackets 15, 16 (the lower left and right frames 13, 14), or as illustrated in FIG. 9, the rollover protective frame 11 can be brought into the tilted position in which the upper frame 17 extends forward with respect to the left and right support brackets 15, 16 (the lower left and right frames 13, 14). The rollover protective frame 11 is often in the upright position when the tractor 1 runs and in the tilted position when tractor 1 is stored.

Particularly, the upper frame 17 has an arched shape (inverted U-shape in front view). The upper frame 17 is arranged above the lower left and right frames 13, 14 and is supported at lower left and right end portions located on the open side, via the left and right support brackets 15, 16 respectively on the lower left and right frames 13, 14 to be rotatable about the rotation supporting points 26.

The upper frame 17 includes a left extension portion 31, a right extension portion 32, and a connecting portion 33. The left and right extension portions 31, 32 extend in the up-down direction and are rotatably supported at lower end portions by the left support bracket 15 and the right support bracket 16 with the support pins 25. The connecting portion 33 is arranged between an upper end portion of the left extension portion 31 and an upper end portion of the right extension portion 32 to connect the upper end portions.

When the rollover protective frame 11 is brought into the upright position, the connecting portion 33 is located by a predetermined distance above the hood 5 and the tractor cab 7 so as to protect a driver seated on the driver seat 8. When the rollover protective frame 11 is brought into the tilted position, the connecting portion 33 is located near headlights 34 disposed on the hood 5 (see FIG. 1).

As illustrated in FIG. 7, upper holes 35 and lower holes 36 that are arranged at a predetermined distance in the up-down direction are disposed in the left support bracket 15. The locking pin 23 is inserted and fixed in the upper holes 35 or the lower holes 36 and holes disposed in a lower end portion of the left extension portion 31 of the upper frame 17, and thus the upper frame 17 can be locked to the left support bracket 15 (lower left frame 13). As a result, the posture of the rollover protective frame 11 can be maintained.

Specifically, the locking pin 23 is inserted and fixed in the upper holes 35 of each of the left and right support brackets 15, 16 and the holes of the left extension portion 31 of the upper frame 17, and thus the upper frame 17 is kept extended upward with respect to the lower left frame 13 and the posture of the rollover protective frame 11 can be maintained in the upright position. Here, the locking pin 23 is configured to be attachable and detachable with respect to the left support bracket 15.

To change the rollover protective frame 11 from the upright position to the tilted position, the locking pin 23 is removed from the upper holes 35, etc. and then the upper frame 17 is rotated forward. Thereafter, the locking pin 23 is inserted and fixed in the lower holes 36 of the left support bracket 15 and the holes of the left extension portion 31 of the upper frame 17. As a result, the upper frame 17 is kept tilted and the posture of the rollover protective frame 11 can be maintained in the tilted position.

Also, as illustrated in FIG. 5, a damper member 41 is disposed on one of the left side portion (left support bracket 15 or the like) and the right side portion (right support bracket 16 or the like) in the rollover protective frame 11, and a restriction member 42 is disposed on the other of the left and right side portions. In the present embodiment, the damper member 41 is disposed on the left side portion of the rollover protective frame 11, and the restriction member 42 is disposed on the right side portion of the rollover protective frame 11.

The damper member 41 is arranged forward to face the lower left frame 13 and the upper frame 17. In the present embodiment, the damper member 41 is formed of a gas damper. As illustrated in FIG. 7, the damper member 41 is disposed such that the longitudinal direction extends along the direction in which each of the lower left frame 13 and the left extension portion 31 of the upper frame 17 extends.

The damper member 41 has a left-right width smaller than that of each of the lower left frame 13 and the left extension portion 31 of the upper frame 17. The damper member 41 is disposed to overlap the frames in rear view of the tractor 1. Thus, the damper member 41 does not come into the forward vision of the driver seated on the driver seat 8 by the lower left frame 13 and the upper frame 17.

The damper member 41 is arranged between the lower left frame 13 and the left extension portion 31 of the upper frame 17. One end portion of the damper member 41 in the longitudinal direction is connected to the lower left frame 13, and the other end portion of the damper member 41 in the longitudinal direction is connected to the left extension portion 31 of the upper frame 17. In addition, the damper member 41 is configured to be extendable and contractable in the longitudinal direction.

As illustrated in FIGS. 7 and 8(a), the damper member 41 is extended when the rollover protective frame 11 is in the upright position. The damper member 41 operates from the extended state in the direction to contract when the posture of the rollover protective frame 11 is changed from the upright position to the tilted position in accordance with the rotation of the upper frame 17. Meanwhile, the damper member 41 operates from the contracted stated in the direction to extend when the posture of the rollover protective frame 11 is changed from the tilted position to the upright position.

When the upper frame 17 rotates such that the rollover protective frame 11 is brought into the tilted position, the damper member 41 can provide resistance to the upper frame 17. Therefore, at the time of the rotating operation of the upper frame 17 for changing the posture of the rollover protective frame 11 from the upright position to the tilted position, the upper frame 17 can be prevented from rapidly rotating and falling down. Consequently, the operability of the rotating operation of the upper frame 17 can be improved.

Additionally, at the time of assembling of the damper member 41 to the rollover protective frame 11, as illustrated in FIG. 8(b), the upper frame 17 is firstly rotated slightly rearward from the rotation position when the rollover protective frame 11 is in the upright position. The state in FIG. 8(b) corresponds to a state where the damper member 41 is longest (in a natural length). Next, the damper member 41 is connected to the left extension portion 31 of the upper frame 17 and the lower left frame 13 in this state. Then, the upper frame 17 is returned to the rotation position in FIG. 8(a) in which the rollover protective frame 11 is in the upright position. Thus, assembling is completed.

For example, when the damper member 41 is longest in FIG. 8(a), the upper frame 17 may rattle in the upright position of FIG. 8(a). Accordingly, the damper member 41 is configured to extend and contract in a range shorter than the longest length as long as the upper frame 17 is switched between the upright position in FIG. 8(a) and the tilted position in FIG. 9.

The upright position in FIG. 8(a) corresponds to a state where the damper member 41 is slightly compressed from the natural length. Therefore, for example, when the damper member 41 in the state of FIG. 8(a) is assembled to the upper frame 17, the damper member 41 needs to be assembled while force is applied to compress the spring thereof, resulting in reduction of assemblability. In this respect, the damper member 41 having the natural length is assembled to the upper frame 17 in the state of FIG. 8(b) in the present embodiment, and thus good assemblability is attained.

The restriction member 42 is a pin-shaped member that can restrict the amount of rotation (degree of tilting) of the upper frame 17 during the rotating operation of the rollover protective frame 11. The restriction member 42 is located on the opposite side of the damper member 41 in the left-right direction in the rollover protective frame 11. As illustrated in FIG. 10, on the right support bracket 16, the restriction member 42 is arranged forward of the rotation supporting point 26 (support pin 25), that is, on the open side. The restriction member 42 is disposed between left and right portions 45, 46 located on the open side. The restriction member 42 is disposed to be bridged between the left and right portions 45, 46 in the present embodiment.

Thus, when the upper frame 17 rotates forward about the rotation supporting point 26 in a case where the posture of the rollover protective frame 11 is changed from the upright position to the tilted position, the restriction member 42 comes into contact from below with the upper frame 17 in motion. Accordingly, the rotation of the upper frame 17 can be restricted. As a result, the tilting position of the rollover protective frame 11 is restricted, and the damper member 41 can be protected.

Also, in the rollover protective frame 11, a grip portion 48 is disposed on the upper frame 17. The grip portion 48 is disposed at a position that is easy to be gripped from the outside of the tractor 1 by a driver or the like who has got out of the tractor cab 7 in a state where the rollover protective frame 11 is in the upright position. In the present embodiment, the grip portion 48 is disposed on the left extension portion 31 of the upper frame 17 and near an upper end position of the hood 5.

The grip portion 48 is formed of a bar-shaped member bend in the middle in the longitudinal direction. The grip portion 48 is disposed to protrude rearward (toward the tractor cab 7 side) from the left extension portion 31 of the upper frame 17 to a position near a rear end position of the hood 5. Thus, when the rollover protective frame 11 is rotated to change the posture from the upright position to the tilted position, the grip portion 48 is always located above the left extension portion 31 of the upper frame 17.

In addition, as illustrated in FIGS. 3, 4, and 5, the grip portion 48 is located on the outer side (left side) in the left-right direction of the innermost end (right end) in the left-right direction of the left extension portion 31 of the upper frame 17. The grip portion 48 is located as close as possible to the left extension portion 31 of the upper frame 17. Accordingly, the grip portion 48 is recognized to be overlapped with the upper frame 17 (left extension portion 31) by a driver seated on the driver seat 8 of the tractor cab 7, and thus the forward visibility of the driver can be prevented from being reduced.

A linking member 50 is disposed for the rollover protective frame 11 configured as just described. Next, the linking member 50 will be described with reference to FIGS. 1 to 7 and FIG. 10.

As illustrated in FIGS. 5 and 6, the linking member 50 connects the left support bracket 15 and the right support bracket 16 of the rollover protective frame 11. The linking member 50 is fixed to the left support bracket 15 (lower left frame 13) and the right support bracket 16 (lower right frame 14) that are immovable with respect to the tractor body frame 2. The linking member 50 can function as a reinforcing member of the rollover protective frame 11.

In the present embodiment, the linking member 50 is disposed between the left support bracket 15 and the right support bracket 16. The linking member 50 has a left-right width substantially equal to a left-right width of the rollover protective frame 11. As illustrated in FIGS. 1, 2, 3, and 4, the linking member 50 is arranged between the rollover protective frame 11 and the steering handle 9 in the front-back direction.

The linking member 50 is arranged along the hood 5 (the outer shape). The linking member 50 is formed of a bar-shaped member having a bent portion in the middle in the longitudinal direction and is formed in a U-shape. The linking member 50 is arranged with the open side facing downward to bypass and enclose the hood 5 (dashboard 10) and is fixed at left and right end portions on the open side to the left support bracket 15 and the right support bracket 16.

Specifically, the linking member 50 is disposed on the left and right sides and above a location near the rear end portion (a continuous portion in which the hood 5 and the dashboard 10 are continuous in the front-back direction) of the hood 5. The linking member 50 is arranged at a predetermine interval from the rear end portion of the hood 5. The interval can be set as necessary. In addition, the linking member 50 is preferably located as close as possible to the hood 5 so as not to reduce the forward vision of a driver seated on the driver seat 8.

Moreover, the linking member 50 is arranged behind the rollover protective frame 11. The closed side (upper side portion) of the linking member 50 is located behind the upper frame 17 of the rollover protective frame 11 so as to be located behind the grip portion 48. The left and right open side portions (lower portions) of the linking member 50 are arranged behind the left support bracket 15 and the right support bracket 16, respectively.

Specifically, the linking member 50 includes an upper left extension portion 51, an upper right extension portion 52, and a horizontal extension portion 53. The upper left extension portion 51 is arranged on the left side of the traveling machine body and near the rear of the left extension portion 31 of the rollover protective frame 11, and the upper right extension portion 52 is arranged on the right side of the traveling machine body and near the rear of the right extension portion 32 of the rollover protective frame 11. The upper left extension portion 51 and the upper right extension portion 52 are configured symmetrically to each other.

The upper left extension portion 51 extends from the left support bracket 15 substantially upward along the hood 5. The upper left extension portion 51 is arranged substantially on the left side of the rear end portion (continuous portion in which the hood 5 and the dashboard 10 are continuous) of the hood 5. As also illustrated in FIG. 7, a portion of the upper left extension portion 51 extends along the left support bracket 15 and is fixed to the left support bracket 15 by appropriate fastening means using a bolt or welding. Therefore, the upper left extension portion 51 is fixed via the left support bracket 15 to the lower left frame 13 and further to the tractor body frame 2.

As illustrated in FIGS. 1, 2, and 3, the upper left extension portion 51 is provided to face a doorway 61 of the tractor cab 7. The upper left extension portion 51 has a shape that can be gripped by a driver getting in and out of the tractor cab 7. The upper left extension portion 51 is arranged forward of the doorway 61. A grip 64 fixed to a fender 63 disposed on the left side of the driver seat 8 is arranged behind the doorway 61. Thus, when getting in and out of the tractor cab 7 through the doorway 61, the driver can place the feet on a step 66 disposed on the doorway 61 and support the body while gripping the grip 64 with the right hand and gripping the upper left extension portion 51 with the left hand. As a result, the driver can stably get in and out of the tractor cab 7.

The upper right extension portion 52 extends from the right support bracket 16 substantially upward along the hood 5. The upper right extension portion 52 is arranged substantially on the right side of the rear end portion (continuous portion in which the hood 5 and the dashboard 10 are continuous) of the hood 5. As also illustrated in FIG. 10, a portion of the upper right extension portion 52 extends along the right support bracket 16 and is fixed to the right support bracket 16 by appropriate fastening means using a bolt or welding. Therefore, the upper right extension portion 52 is fixed via the right support bracket 16 to the lower right frame 14 and further to the tractor body frame 2.

The horizontal extension portion 53 connects upper end portions of the upper left and right extension portions 51, 52. The horizontal extension portion 53 is arranged between the upper end portions of the upper left and right extension portions 51, 52 and placed above a location near the rear end portion (continuous portion in which the hood 5 and the dashboard 10 are continuous) of the hood 5. The horizontal extension portion 53 is disposed to extend in the left-right direction and is connected at one end portion in the longitudinal direction to the upper end portion of the upper left extension portion 51 and at the other end portion in the longitudinal direction to the upper end portion of the upper right extension portion 52.

As illustrated in FIGS. 5 and 6, an upper end position of the horizontal extension portion 53 is located substantially on the same level in the up-down direction as an upper end position of the steering handle 9. Thus, the linking member 50 cannot easily come into the forward vision of the driver seated on the driver seat 8. In addition, the upper end position of the horizontal extension portion 53 is located substantially on the same level in the up-down direction as an upper end position of the grip portion 48. In other words, the upper end position of the grip portion 48 is located substantially on the same level in the up-down direction as the upper end position of the steering handle 9.

With such a configuration, when the tractor 1 falls over in a case where the rollover protective frame 11 is in the upright position, the rollover protective frame 11 receives an impact. At this time, the impact force due to the impact received by the rollover protective frame 11 can be distributed and transmitted by the linking member 50 as evenly as possible to the left and right sides of the tractor body frame 2. Moreover, the strength of the rollover protective frame 11 can be improved by the linking member 50. As a result, the rollover protective frame 11 can be avoided from being damaged by the impact force.

As described above, the tractor 1 according to the present embodiment includes the tractor body frame 2, the driver seat 8, and the rollover protective frame 11. The driver seat 8 is disposed above the tractor body frame 2 and is a section on which a driver can sit. The rollover protective frame 11 is disposed in front of and on at least a side of the driver seat 8 to protect the driver when the tractor 1 falls over. The rollover protective frame 11 includes the lower left frame 13 and the lower right frame 14, and the left support bracket 15 and the right support bracket 16. The lower left frame 13 and the lower right frame 14 are respectively attached to the left and right sides of the tractor body frame 2. The left support bracket 15 and the right support bracket 16 include the rotation supporting points 26 and are respectively disposed on the lower left frame 13 and the lower right frame 14. In addition, the tractor 1 includes the linking member 50 that connects the left support bracket 15 and the right support bracket 16.

Thus, when the rollover protective frame 11 receives an impact at the time of falling over of the tractor 1, the presence of the linking member 50 enables the impact force due to the impact to be distributed and transmitted evenly to the left and right sides of the tractor body frame 2 of the tractor 1. Therefore, the impact force can be avoided from being concentratedly transmitted to a portion of the rollover protective frame 11. As a result, the rollover protective frame 11 can be prevented from being damaged. In addition, the linking member 50 can be used as a grip portion that can be gripped by the driver when the driver gets in and out of the tractor 1, and safety in this case can be increased.

In the tractor 1 according to the present embodiment, the rollover protective frame 11 includes the upper frame 17. The upper frame 17 has an arched shape. The upper frame 17 is arranged above the lower left frame 13 and the lower right frame 14. The upper frame 17 is supported rotatably about the rotation supporting points 26 on the lower left frame 13 and the lower right frame 14 respectively via the left support bracket 15 and the right support bracket 16.

Thus, the functionality of the rollover protective frame 11 can be increased.

The tractor 1 according to the present embodiment includes the steering handle 9. The steering handle 9 is disposed in front of the driver seat 8 and behind the rollover protective frame 11. The linking member 50 is arranged such that the upper end position of the linking member 50 is located on the same level in the up-down direction as the upper end position of the steering handle 9 in the up-down direction.

Therefore, the linking member 50 cannot easily come into the forward vision of the driver seated on the driver seat 8. As a result, the forward vision of the driver can be prevented from being impaired by the linking member 50.

In the tractor 1 according to the present embodiment, the upper frame 17 is rotatably operated relative to the lower left frame 13 and the lower right frame 14 and thereby the rollover protective frame 11 is configured so as to be brought into the upright position or the tilted position. The upright position is the position in which the upper frame 17 extends upward with respect to the lower left frame 13 and the lower right frame 14. The tilted position is the position in which the upper frame 17 extends forward with respect to the lower left frame 13 and the lower right frame 14. The damper member 41 is disposed on the rollover protective frame 11. The damper member 41 is arranged forward to face the lower left frame 13 or the lower right frame 14 and the upper frame 17, and operates from the contracted state in the direction to extend when the posture of the rollover protective frame 11 is changed from the tilted position to the upright position.

Thus, the operability of the rollover protective frame 11 at the time of the rotating operation can be improved. In addition, the damper member 41 cannot easily come into the vision of the driver seated on the driver seat 8. As a result, the forward vision of the driver can be prevented from being impaired by the damper member 41.

In the tractor 1 according to the present embodiment, the grip portion 48 is disposed on the rollover protective frame 11. The grip portion 48 is attached to the upper frame 17 and is gripped when the upper frame 17 is rotatably operated.

Thus, the rotating operation of the upper frame 17 can be conducted by using the grip portion 48. As a result, the operability of the rollover protective frame can be improved.

In the tractor 1 according to the present embodiment, the upper frame 17 includes the left extension portion 31, the right extension portion 32, and the connecting portion 33. The left extension portion 31 extends in the up-down direction and is rotatably supported at the lower end portion by the left support bracket 15. The right extension portion 32 extends in the up-down direction and is rotatably supported at the lower end portion by the right support bracket 16. The connecting portion 33 connects the upper end portion of the left extension portion 31 and the upper end portion of the right extension portion 32. The grip portion 48 is attached to the left extension portion 31 and is located on the outer side (left side) in the left-right direction of the innermost end (right end) in the left-right direction of the left extension portion 31 to which the grip portion is attached.

Thus, the grip portion 48 can be arranged such that the forward vision of the driver seated on the driver seat 8 is less likely to be hindered. As a result, the forward vision of the driver can be prevented from being impaired by the grip portion 48.

Although the preferred embodiments of the present invention are described above, the configurations described above can be modified, for example, as follows.

The configuration and position of the linking member 50 are not particularly limited. For example, the linking member 50 may be arranged such that the upper end position of the linking member 50 is located below the upper end position of the steering handle 9. In addition, the linking member 50 is preferably disposed as close as possible to the hood (dashboard 10) so as not to impair the forward vision of the driver seated on the driver seat 8 as much as possible.

The configuration and position of the damper member 41 is not particularly limited. For example, the damper member 41 may be arranged forward to face the lower right frame 14 and the upper frame 17. In this case, the restriction member 42 is disposed on the left support bracket 15 located on the opposite side of the damper member 41 in the left-right direction. In addition, the damper member 41 is preferably disposed on the rollover protective frame 11 so as not to impair the forward vision of the driver seated on the driver seat 8 as much as possible.

The configuration and position of the grip portion 48 are not particularly limited. In addition, the grip portion 48 is preferably disposed on the rollover protective frame 11 so as not to impair the forward vision of the driver seated on the driver seat 8 as much as possible.

Also, the grip portion 48 may be attached to at least one of the left extension portion 31 and the right extension portion 32. For example, the grip portion 48 may be attached to the right extension portion 32. In this case, the grip portion 48 is attached to the right extension portion 32 to be located on the outer side (right side) in the left-right direction of the innermost end (left end) in the left-right direction.

Obviously, numerous modifications and variations of the present invention can be made in the light of the above teaching. Therefore, it should be understood that the present invention may be practiced in a manner other than that described herein within the scope of the appended claims.

### DESCRIPTION OF REFERENCE NUMERALS

1 Tractor
2 Tractor body frame
8 Driver seat
9 Steering handle
11 Rollover protective frame
13 Lower left frame
14 Lower right frame
15 Left support bracket
16 Right support bracket
17 Upper frame
31 Left extension portion
32 Right extension portion
33 Connecting portion
41 Damper member
48 Grip portion
50 Linking member

## Claims

1. A tractor, comprising:
a tractor body frame;
a driver seat disposed above the tractor body frame, the driver seat being on which a driver can sit; and
a rollover protective frame disposed in front of and on at least a side of the driver seat to protect the driver when the tractor falls over, wherein
the rollover protective frame includes:
a lower left frame and a lower right frame that are attached respectively to left and right sides of the tractor body frame; and
a left support bracket and a right support bracket that include rotation supporting points and are provided respectively on the lower left frame and the lower right frame, and
the tractor comprising a linking member that connects the left support bracket and the right support bracket.

2. The tractor according to claim 1, wherein
the rollover protective frame includes an upper frame,
the upper frame has an arched shape and is arranged above the lower left frame and the lower right frame, and
the upper frame is supported rotatably about the rotation supporting points respectively via the left support bracket and the right support bracket on the lower left frame and the lower right frame.

3. The tractor according to claim 1 or claim 2, comprising
a steering handle disposed in front of the driver seat and behind the rollover protective frame, wherein
the linking member is arranged such that an upper end position of the linking member is located on the same level as or below an upper end position of the steering handle in an up-down direction.

4. The tractor according to claim 2, wherein
the upper frame is rotatably operated relative to the lower left frame and the lower right frame and thereby the rollover protective frame is brought into an upright position in which the upper frame extends upward with respect to the lower left frame and the lower right frame or is brought into a tilted position in which the upper frame extends forward with respect to the lower left frame and the lower right frame, and
the tractor comprises a damper member, the damper member being arranged forward to face the lower left frame or the lower right frame and the upper frame, the damper member operating from a contracted state in a direction to extend when the rollover protective frame is changed from the tiled position to the upright position.

5. The tractor according to claim 2 or 4, wherein the rollover protective frame is provided with a grip portion that is attached to the upper frame and is gripped when the upper frame is rotatably operated.

6. The tractor according to claim 5, wherein
the upper frame includes a left extension portion extending in an up-down direction and rotatably supported at a lower end portion by the left support bracket, a right extension portion extending in the up-down direction and rotatably supported at a lower end portion by the right support bracket, and a connecting portion connecting an upper end portion of the left extension portion and an upper end portion of the right extension portion, and
the grip portion is attached to at least one of the left extension portion and the right extension portion, and is located on an outer side in a vehicle width direction of an innermost end in the vehicle width direction of the left extension portion or the right extension portion to which the grip portion is attached.
